# EUROPEAN PATENT APPLICATION

(11) **EP 4 597 792 A1**
(43) Date of publication of application: **06.08.2025**
(21) Application number: 23870150.2
(22) Date of filing: 31.08.2023
(51) Int. Cl.: H02J 7/35

(54) **COMMUNICATION STATION AND POWER SUPPLY CONTROL METHOD AND DEVICE THEREFOR, AND COMPUTER STORAGE MEDIUM**

(30) Priority: 29.09.2022 CN 202211204577
(71) Applicant: ZTE CORPORATION, Shenzhen, Guangdong 518057 (CN)
(72) Inventor: ZHANG, Dedi, Shenzhen, Guangdong 518057 (CN); XIONG, Yong, Shenzhen, Guangdong 518057 (CN); WANG, Wei, Shenzhen, Guangdong 518057 (CN); ZHANG, Kaiyuan, Shenzhen, Guangdong 518057 (CN); XIAO, Shengxian, Shenzhen, Guangdong 518057 (CN)
(74) Representative: Chimini, Francesco
(86) International application number: PCT/CN2023/116306
(87) International publication number: WO 2024/066910

(57) **Abstract**

Provided in the present disclosure is a method for controlling power source of a communication station. The method includes: determining a capacity threshold of an energy storage assembly of the communication station, and then controlling working states of an energy module and the energy storage assembly of the communication station based on the determined capacity threshold. Further proposed in the present disclosure are a communication station and a power source control device thereof, and a computer storage medium.

## Description

### Cross-Reference to Related Application

The present disclosure claims priority to Chinese Patent Application No. 202211204577.5, filed on September 29, 2022, which is incorporated herein by reference in its entirety.

### Technical Field

The present disclosure relates to the technical field of communication power supplies, specifically to a communication station and a power supply control method and device thereof, and a computer storage medium.

### Background

Currently, all communication base stations are configured with a photovoltaic charging function. However, due to the high randomness and uncertainty of solar energy, its application is not ideal.

In order to improve the efficiency of solar energy application, someone has proposed a solution based on background network management. Specifically, the solar energy production capacity and the load energy consumption are predicted by using brute-force calculation of a neural network in combination with big data such as illumination information, load parameters, weather forecasts, and historical same-period data acquired in real time, and lithium batteries with high cycle performance are used as stored energy for utilization, so as to maximize the utilization of solar energy.

However, the above solution requires a large amount of data for training, and the training algorithm itself is very complex, resulting in high requirements for conditions such as computing power, data storage, and the network, and high implementation cost and difficulty.

### Summary

In view of the above technical problems, the present disclosure provides a communication station and a power source control method and device thereof, and a computer storage medium, aiming to reduce the implementation cost and difficulty while improving the utilization rate of solar energy.

In a first aspect, the present disclosure provides a method for controlling power source of a communication station, including:
determining a capacity threshold of an energy storage assembly of the communication station; and
controlling working states of an energy module and the energy storage assembly of the communication station based on the determined capacity threshold of the energy storage assembly.

In a second aspect, an embodiment of the present disclosure further provides a device for controlling power source of a communication station, including:
a capacity threshold determination module, configured to determine a capacity threshold of an energy storage assembly of the communication station; and
a work control module, configured to control working states of an energy module and the energy storage assembly of the communication station based on the determined capacity threshold of the energy storage assembly.

In a third aspect, an embodiment of the present disclosure further provides a communication station, including an energy module, an energy storage assembly, and a power source control module, where the power source control module includes a processor and a memory, the memory stores a program for controlling the energy module and the energy storage assembly, and the program is called by the processor to perform the power source control method according to any one of the above embodiments.

In a fourth aspect, an embodiment of the present disclosure further provides a computer storage medium, storing a computer processing program that is called by a processor to perform the power source control method according to any one of the above embodiments.

### Brief Description of the Drawings

The accompanying drawings herein are incorporated into the specification to constitute a part of this specification, show the embodiments in accordance with the present disclosure, and are used together with the specification to explain the principle of the present disclosure. To more clearly illustrate the technical solutions in the embodiments of the present disclosure, the accompanying drawings that need to be used in the description of the embodiments will be briefly introduced below. Apparently, those of ordinary skill in the art may also derive other accompanying drawings from these accompanying drawings without creative efforts.
FIG. 1 is a schematic structural diagram of a power module of a communication station according to an embodiment of the present disclosure;
FIG. 2 is a schematic flowchart of a method for controlling power source of a communication station according to a first embodiment of the present disclosure;
FIG. 3 is a schematic flowchart of a method for controlling power source of a communication station according to a second embodiment of the present disclosure;
FIG. 4 is a schematic flowchart of a method for controlling power source of a communication station according to a third embodiment of the present disclosure; and
FIG. 5 is a schematic structural diagram of a device for controlling power source of a communication station according to an embodiment of the present disclosure.

The objective achievement, functional characteristics and advantages of the present disclosure will be further illustrated with reference to the accompanying drawings in conjunction with the embodiments. The specific embodiments of the present disclosure have been shown through the above accompanying drawings, and there will be a more detailed description hereinafter. These accompanying drawings and textual descriptions are not intended to limit the scope of the concept of the present disclosure in any way, but rather to illustrate the concept of the present disclosure for those skilled in the art by referring to the specific embodiments.

### Detailed Description of the Embodiments

Herein, exemplary embodiments will be described in detail, with examples shown in the accompanying drawings. When the following description refers to the accompanying drawings, the same numbers in different drawings represent the same or similar elements, unless otherwise indicated. The implementations described in the following exemplary embodiments do not represent all the implementations consistent with the present disclosure. On the contrary, they are merely examples of the devices and methods consistent with some aspects of the present disclosure as detailed in the appended claims.

It is to be noted that herein, the term "include", "comprise", or any other variation thereof is intended to cover a non-exclusive inclusion, so that a process, method, article, or device including a series of elements not only includes those elements, but also includes other elements not expressly listed or elements inherent to such process, method, article, or device. Without further limitations, an element defined by the phrase "including a..." does not exclude the presence of additional identical elements in the process, method, article, or device including the element. In addition, components, features, and elements with the same names in different embodiments of the present disclosure may have the same meaning or different meanings, and their specific meanings need to be determined based on their explanations in the specific embodiment or by further combining with the context in the specific embodiment.

It should be understood that although the terms such as first, second, and third may be used herein to describe various information, the information should not be limited to these terms. These terms are only used to distinguish information of the same type from each other. For example, without departing from the scope of the present disclosure, the first information may also be referred to as the second information, and similarly, the second information may also be referred to as the first information. Depending on the context, the word "if" as used herein may be interpreted as "when...", "while...", or "in response to determining". Moreover, as used herein, the singular forms "a", "one", and "the" are intended to include the plural forms as well, unless the context clearly indicates otherwise. It should be further understood that the terms "comprise" and "include" indicate the presence of the features, steps, operations, elements, components, items, categories, and/or groups, but do not exclude the presence, occurrence, or addition of one or more other features, steps, operations, elements, components, items, categories, and/or groups. The terms "or", "and/or", "including at least one of the following" and the like used in the present disclosure can be interpreted as inclusive, or mean any one or any combination. For example, "including at least one of the following: A, B, C" means "any one of the following: A; B; C; A and B; A and C; B and C; A, B, and C". For another example, "A, B, or C" or "A, B, and/or C" means "any one of the following: A; B; C; A and B; A and C; B and C; A, B, and C". An exception to this definition occurs only when a combination of elements, functions, steps, or operations is inherently mutually exclusive in some ways.

It should be understood that although the various steps in the flowcharts of the embodiments of the present disclosure are sequentially shown according to the indication of the arrows, these steps are not necessarily executed sequentially in the order indicated by the arrows. Unless otherwise specified herein, the execution order of these steps is not strictly limited, and they can be executed in other orders. Moreover, at least some of the steps in the figure may include multiple sub-steps or multiple stages. These sub-steps or stages are not necessarily executed and completed at the same time, but can be executed at different time. They are not necessarily executed in order, but can be executed alternately or in turn with other steps or at least some of the sub-steps or stages of other steps.

Depending on the context, the words "if" and "when" as used herein can be interpreted as "when...", "while...", "in response to determining", or "in response to detecting". Similarly, depending on the context, the phrases "if it is determined" or "if it is detected (the stated condition or event)" can be interpreted as "when it is determined", "in response to determining", "when it is detected (the stated condition or event)", or "in response to detecting (the stated condition or event)".

It is to be noted that herein, step designations such as S10 and S20 are used to more clearly and briefly express corresponding content, and do not constitute a substantial limitation on the order. When those skilled in the art implement them specifically, they may execute S20 first and then S10, etc., but these should all fall within the scope of protection of the present disclosure.

It should be understood that the specific embodiments described herein are merely used to explain the present disclosure, but not to limit the present disclosure.

In the subsequent description, the use of suffixes such as "module", "component", or "unit" for representing elements is only for the convenience of illustrating the present disclosure, and they have no specific meaning in themselves. Therefore, "module", "component", or "unit" can be used in combination.

The existing communication base stations need to ensure uninterrupted power supply to maintain their normal operation. Therefore, the existing communication base stations are generally equipped with energy storage assemblies to supply power through them when energy is insufficient. Moreover, while the communication base station is powered by a mains supply or solar energy, the energy storage assembly is charged to ensure that it has sufficient power.

In addition, in order to save energy, the solar energy is used as much as possible to charge the energy storage assembly. However, due to the high randomness and uncertainty of the solar energy, in actual use, there often occurs a situation where the solar energy is wasted in vain after the energy storage assembly is fully charged, namely a phenomenon of light abandonment.

Someone has proposed using background network management to achieve prediction of solar energy production capacity and load energy consumption through calculation of a neural network in combination with weather forecasts, historical same-period data, etc., by real-time acquisition of the ground illumination intensity, temperature, and load power, and using lithium batteries with high cycle performance as stored energy for utilization, so as to maximize the utilization of solar energy. However, this solution requires a large amount of data for training, and the training algorithm itself is very complex, resulting in high implementation cost and difficulty.

In this regard, during the process of maximizing the utilization of solar energy, the inventor has proposed a new method: setting a capacity threshold of the energy storage assembly, and controlling a power supply of the communication base station, so that the capacity of the energy storage assembly can be maintained at the capacity threshold to achieve the purpose of absorbing the solar energy as much as possible. Since the method does not require processing of big data algorithms for the background network management and can run on each communication base station, the implementation cost and difficulty are reduced while the photovoltaic utilization rate is improved.

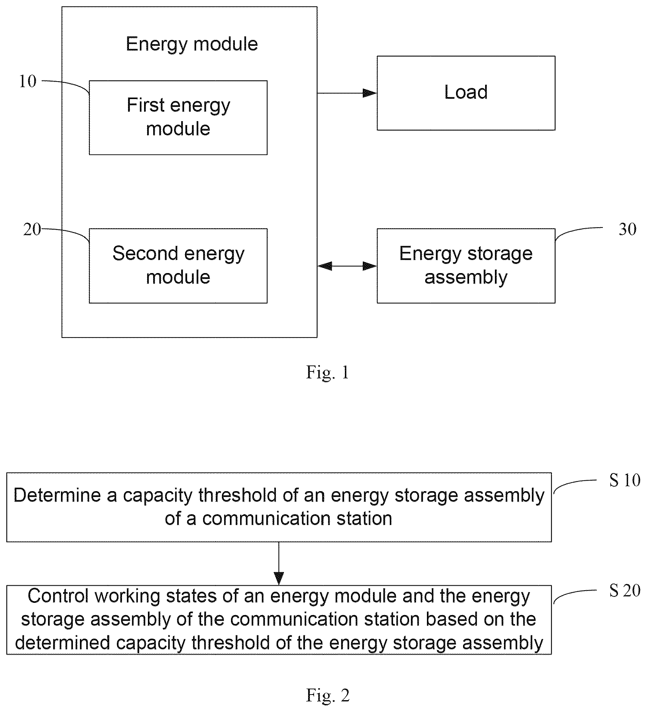

Reference is made to FIG. 1. FIG. 1 is a schematic structural diagram of a power module of a communication station according to an embodiment of the present disclosure. The power module includes a first energy module 10, a second energy module 20, and an energy storage assembly 30. The first energy module 10 is, for example, a solar energy module, a wind energy module, or other energy modules, and the second energy module 20 is, for example, a rectifier module connected to a mains supply. In order to make full use of renewable energy sources such as solar energy, an output priority of the first energy module 10 is higher than an output priority of the second energy module 20. Taking the solar energy as an example, when the sunlight is strong, a load is preferentially powered by the solar energy, and the excess energy is then used to charge the energy storage assembly. When the power supplied from the solar energy is insufficient, the load is powered by the energy storage assembly; and when the power of the energy storage assembly is insufficient, the load is powered by the mains supply. For ease of description, in the following embodiments, the first energy module is described as the solar energy module, and the second energy module is described as the rectifier module for the mains supply.

Reference is made to FIG. 2. FIG. 2 is a schematic flowchart of a method for controlling power source of a communication station according to a first embodiment of the present disclosure. The power source control method according to this embodiment includes:
S10: determining a capacity threshold of an energy storage assembly of the communication station; and
S20: controlling working states of an energy module and the energy storage assembly of the communication station based on the determined capacity threshold of the energy storage assembly.

In the above step S10, the capacity threshold of the energy storage assembly can be set according to an empirical value, or it can be flexibly set according to the actual operation situation such as current environmental information and historical operation data. After the capacity threshold of the energy storage assembly is determined, the working states of the energy module and the energy storage assembly can be controlled to maintain the capacity of the energy storage assembly at the capacity threshold. The capacity of the energy storage assembly refers to percentage capacity. For example, when the sunlight is strong, a load is powered by solar energy, and the excess energy is used to charge the energy storage assembly; and when the energy storage assembly supplies power to the load and the capacity thereof reaches the capacity threshold, the energy storage assembly stops supplying power to the load, so that when the sunlight becomes strong next time, it can absorb the excess solar energy, thus improving the photovoltaic utilization efficiency.

In some embodiments, the step S10 includes: dynamically adjusting the capacity threshold of the energy storage assembly based on a historical capacity record of the energy storage assembly during operation of the communication station, so that the energy storage assembly absorbs energy exceeding load power to the maximum extent.

In practical use, the capacity threshold of the energy storage assembly set according to the empirical value may be able to meet most of usage scenarios. However, the usage scenarios of the communication station may vary due to its geographical location, weather conditions, or the power consumption situation of the communication station. Therefore, during use, the capacity threshold set according to the empirical value needs to be dynamically adjusted, so that the capacity of the energy storage assembly absorbing the solar energy gradually approaches an upper capacity limit, that is, the energy storage assembly can absorb the energy exceeding the load power to the maximum extent.

In some embodiments, the historical capacity record of the above energy storage assembly, such as a percentage capacity extremum record of the energy storage assembly, may specifically include a date, maximum percentage capacity of the energy storage assembly, maximum update time, minimum percentage capacity of the energy storage assembly, minimum update time, etc. The step S10 specifically includes: dynamically adjusting the capacity threshold of the energy storage assembly based on a historical percentage capacity extremum record of the energy storage assembly during operation of the communication station.

The process of dynamically adjusting the capacity threshold of the energy storage assembly based on the above historical capacity record is as follows:
Step one: determining whether maximum capacity of the energy storage assembly is equal to 100%;
if the maximum capacity of the energy storage assembly is equal to 100%, determining whether a difference between the maximum capacity of the energy storage assembly and minimum capacity of the energy storage assembly is greater than α; if the difference between the maximum capacity of the energy storage assembly and the minimum capacity is greater than α, subtracting β from the capacity threshold of the energy storage assembly; and if the difference between the maximum capacity of the energy storage assembly and the minimum capacity is less than or equal to α, keeping the capacity threshold of the energy storage assembly unchanged;
Step two: if the maximum capacity of the energy storage assembly is not equal to 100%, determining whether the maximum capacity of the energy storage assembly is within a range of [expected capacity, 99%]; and
if the maximum capacity of the energy storage assembly is within the range of [expected capacity, 99%], keeping the capacity threshold of the energy storage assembly unchanged; and
Step three: if the maximum capacity of the energy storage assembly is not within the range of [expected capacity, 99%], determining whether the maximum capacity of the energy storage assembly is less than the expected capacity - 1;
if the maximum capacity of the energy storage assembly is less than the expected capacity - 1, determining whether the maximum capacity of the energy storage assembly in the last N days is less than the expected capacity - 1; if the maximum capacity of the energy storage assembly in the last N days is less than the expected capacity - 1, adding the capacity threshold of the energy storage assembly to max[β, max(maximum capacity in the last N days)], that is, first determining the maximum capacity in the last N days, then selecting relatively large capacity from the maximum capacity and β, and finally adding the selected capacity to the current capacity threshold of the energy storage assembly to serve as an adjusted capacity threshold; and if the maximum capacity of the energy storage assembly in the last N days is greater than or equal to the expected capacity - 1, keeping the capacity threshold of the energy storage assembly unchanged.

Through the above steps, the capacity threshold of the energy storage assembly can be gradually and dynamically adjusted to optimal capacity based on the actual situation of a power system for the communication station, which can not only maximize the absorption of the solar energy exceeding the load power, but also enable the energy storage assembly to reach a nearly fully charged state.

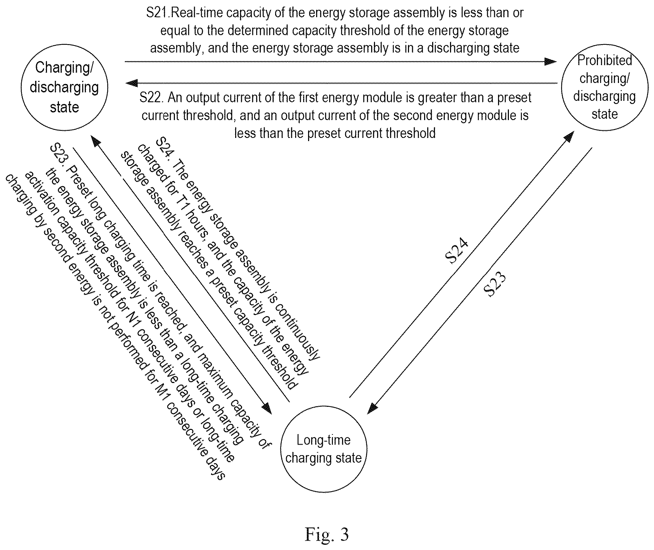

In some embodiments, the above energy storage assembly has a charging/discharging state and a prohibited charging/discharging state. The capacity of the energy storage assembly is monitored to achieve switching between two states. Reference is made to FIG. 3. FIG. 3 is a schematic flowchart of a method for controlling power source of a communication station according to a second embodiment of the present disclosure. The above step S20 includes the following steps.

In S21, when real-time capacity of the energy storage assembly is less than or equal to the determined capacity threshold of the energy storage assembly, and the energy storage assembly is in a discharging state, the energy storage assembly is controlled to enter a prohibited charging/discharging state.

In this embodiment, when the energy storage assembly is in the discharging state, the energy storage assembly is supplying power to the load; and when the energy storage assembly is in the charging/discharging state, the energy module can charge the energy storage assembly, or the energy storage assembly can supply power to the load. When the energy storage assembly supplies power to the load and the capacity thereof has reached the determined capacity threshold, the energy storage assembly is controlled to prohibit charging/discharging, that is, the energy storage assembly stops supplying power to the load, and the energy module also stops charging the energy storage assembly. Since the energy storage assembly supplies power to the load when the solar energy is insufficient, the load is powered by the mains supply through the rectifier module after the energy storage assembly stops supplying power to the load. The charging of the energy storage assembly is restricted to prevent the mains supply from charging the energy storage assembly when it supplies power to the load, so that the energy storage assembly can reserve space to absorb the solar energy when the sunlight becomes strong next time.

In S22, when the energy storage assembly is in a prohibited charging/ discharging state, an output current of the first energy module is greater than a preset current threshold, and an output current of the second energy module is less than the preset current threshold, the energy storage assembly is controlled to enter a charging/discharging state.

The first energy module is, for example, a solar energy module, and the second energy module is, for example, a rectifier module for a mains supply. Through the output current of the first energy module and the output current of the second energy module, it can be determined that energy provided by the first energy module is stronger than energy provided by the second energy module. In other words, the solar energy becomes stronger. At this time, the energy storage assembly is controlled to enter the charging/discharging state, and the energy storage assembly can absorb the excess solar energy beyond the power supplied to the load.

According to this embodiment, the energy storage assembly is switched between the charging/discharging state and the prohibited charging/discharging state based on the capacity threshold of the energy storage assembly, so that the service life of the energy storage assembly is prevented from being shortened due to excessively low capacity, and when the capacity of the energy storage assembly is insufficient, the waste caused by charging of the energy storage assembly by the mains supply is avoided and the solar energy is fully absorbed, thus improving the photovoltaic utilization efficiency.

In some embodiments, when the energy storage assembly is in the charging/discharging state, in order to ensure that the energy storage assembly absorbs the solar energy rather than electrical energy, the following settings are made in this embodiment:
An output voltage of the second energy module 20, namely the rectifier module is controlled to be a relatively high voltage selected from a preset first voltage threshold and a difference between a real-time voltage and a preset second voltage threshold, namely max[busbar voltage - δ2, guaranteed minimum voltage], where the real-time voltage is a detected real-time voltage of a direct-current output terminal, also known as a busbar voltage; the preset first voltage threshold is a guaranteed minimum voltage, which aims to prevent the energy storage assembly from being over-discharged or prevent the load from losing power; and the preset second voltage threshold δ2 is a set empirical value.

An output voltage of the first energy module 10, namely the solar energy module is controlled to be a sum of the output voltage of the second energy module 20 and a preset third voltage threshold. The preset third voltage threshold δ1 is a set empirical value, where δ1 > δ2 > 0 V. By setting the output voltage of the first energy module, when the solar energy and the mains supply are controlled to supply power to the load, the solar energy is preferentially used to supply power to the load.

In the above embodiment, when the output voltage of the second energy module is controlled, its output voltage will be dynamically adjusted based on a change in the busbar voltage, and the second energy module will change with a change in the first energy module, so that through the adjustment and control of the output voltage of the first energy module 10, a priority order for supplying power to the load can be set as follows: the first energy module > the energy storage assembly > the second energy module.

In some embodiments, when the energy storage assembly is in the charging/discharging state, a maximum charging current of the energy storage assembly is set to prevent the energy storage assembly from being damaged by an excessive current when the energy module charges the energy storage assembly.

In some embodiments, when the energy storage assembly is in the prohibited charging/discharging state, the following settings are made:
The output voltage of the second energy module is adjusted to enable a charging current of the energy storage assembly to be within a preset current range; and the output voltage of the first energy module is controlled to be the sum of the output voltage of the second energy module and the preset third voltage threshold.

In order to maintain the capacity of the energy storage assembly at the capacity threshold, a target current range of the charging current of the energy storage assembly is set, that is, the charging current of the energy storage assembly ∈ [-a, a], where a is adjusted according to the detection accuracy of the system. As mentioned previously, when the energy storage assembly is in the prohibited charging/discharging state, the solar energy is too weak to supply power to the load, and only the mains supply can supply power to the load. Therefore, in order to keep the charging current of the energy storage assembly within the current range, the output voltage of the second energy module, namely the rectifier module is adjusted. Specifically, it is determined whether a detected charging current is within the target current range; if the detected charging current is within the target current range, the output voltage of the rectifier module remains unchanged; if the detected charging current is less than a lower limit (-a), the output voltage of the rectifier module is gradually increased until the set target current range is reached; and if the detected charging current is greater than an upper limit (+a) of the current range, the output voltage of the rectifier module is gradually decreased until the set target current range is reached. The preset third voltage threshold is a set empirical value and may be equal to or not equal to the second voltage threshold.

In order to prevent the output voltage of the rectifier module from being too high, a target voltage can be set. When the output voltage of the rectifier module gradually increases to reach the target voltage, it will no longer increase.

In addition, the output voltage of the solar energy module will change following the output voltage of the rectifier module, so as to monitor a change in the solar energy and ensure timely switching of the charging/discharging state.

In some embodiments, in order to calibrate the capacity of the energy storage assembly to improve the accuracy of power source control, in this embodiment, a long-time charging state of the energy storage assembly is added, that is, the energy storage assembly is continuously charged by second energy.

The output voltage of the second energy module is adjusted to enable the charging current of the energy storage assembly to reach the preset maximum charging current, where when the output voltage of the second energy module increases to a preset fourth voltage threshold, the output voltage is maintained at the fourth voltage threshold for operation.

When the energy storage assembly enters the long-time charging state, by setting the maximum charging current of the energy storage assembly, the output voltage of the second energy module is adjusted based on the maximum charging current of the energy storage assembly. Specifically, it is determined whether the detected charging current reaches the maximum charging current; if the detected charging current reaches the maximum charging current, the output voltage of the rectifier module remains unchanged; if the detected charging current does not reach the maximum charging current, the output voltage of the rectifier module is gradually increased until the set maximum charging current is reached; and if the detected charging current is greater than the maximum charging current, the output voltage of the rectifier module is gradually decreased until the set maximum charging current is reached. The preset fourth voltage threshold is a set empirical value and may be equal to or not equal to the third voltage threshold and the second voltage threshold.

In order to prevent the output voltage of the rectifier module from being too high, a target voltage can be set. When the output voltage of the rectifier module gradually increases to reach the target voltage, it will no longer increase.

In some embodiments, triggering conditions for entering and exiting the long-time charging state of the energy storage assembly include the following conditions.

In S23, when preset long charging time is reached, and maximum capacity of the energy storage assembly is less than a long-time charging activation capacity threshold for N1 consecutive days or long-time charging by second energy is not performed for M1 consecutive days, the energy storage assembly is controlled to enter the long-time charging state, and the second energy module is controlled to perform long-time charging on the energy storage assembly.

In S24, when the energy storage assembly is continuously charged for T1 hours, and the capacity of the energy storage assembly reaches a preset capacity threshold, the energy storage assembly is controlled to exit the long-time charging state.

The charging/discharging state is switched to the mains-supply long-time charging state: If system time reaches long-time charging activation time and the maximum capacity of the energy storage assembly is less than a long-time charging activation capacity threshold (e.g., 90%) for N1 consecutive days or long-time charging by the mains supply is not performed for M1 consecutive days, the energy storage assembly exits the charging/discharging state and enters the mains-supply long-time charging state.

The prohibited charging/discharging state is switched to the mains-supply long-time charging state: If system time reaches long-time charging activation time and the maximum capacity of the energy storage assembly is less than a long-time charging activation capacity threshold (e.g., 90%) for N1 consecutive days or long-time charging by the mains supply is not performed for M consecutive days, the energy storage assembly exits the prohibited charging/discharging state and enters the mains-supply long-time charging state.

The energy storage assembly exits the mains-supply long-time charging state: In the mains-supply long-time charging state, if long-time charging completion conditions are met, that is, the charging time is greater than or equal to T hours and the capacity of the energy storage assembly is 100%, the energy storage assembly enters the charging/discharging state. Since the capacity of the energy storage assembly is 100% at this time, the energy storage assembly will not enter the prohibited charging/discharging state, but enter the charging/discharging state. The preset capacity threshold is 100%. Certainly, it may also be set to other values.

The above embodiment is applicable to a scenario of a flat electricity price of the mains supply. However, there is also a scenario of peak and valley electricity prices of the mains supply for the type of the mains supply. When the present disclosure is applied to the scenario of the peak and valley electricity prices of the mains supply, the valley electricity price should ensure that charging termination capacity of the energy storage assembly is maintained at a charging termination capacity threshold, so that the capacity threshold described in the following embodiments refers to the charging termination capacity threshold.

The above step S10 includes:
in the scenario of the peak and valley electricity prices of the mains supply, predicting a capacity change value of the energy storage assembly on the next day based on a weather environment in a historical capacity change value record of the energy storage assembly during operation of the communication station, and adjusting the capacity threshold of the energy storage assembly based on the predicted capacity change value of the energy storage assembly.

The above historical capacity change value record may include a date, a weather factor, a crowd factor, maximum daytime capacity of the energy storage assembly, maximum nighttime capacity of the energy storage assembly, and a capacity change value of the energy storage assembly.

The process of predicting a capacity change value of the energy storage assembly on the next day based on a weather environment in a historical capacity change value record is as follows.

The records are searched for matching records where the weather factor and the crowd factor for the last N2 times match the environment on the next day to obtain the matching capacity change records of the energy storage assembly; and then the obtained capacity change records are averaged to obtain predicted solar energy storage capacity on the next day. If the matching records for the weather factor and the crowd factor are not found in the records, the latest capacity change record of the energy storage assembly is selected as the predicted solar energy storage capacity on the next day, namely the predicted capacity change value of the energy storage assembly.

Then, the capacity threshold of the energy storage assembly is adjusted based on the predicted capacity change value of the energy storage assembly. In an embodiment, the capacity of the energy storage assembly is calculated according to a preset relationship. It is specifically as follows: The charging termination capacity threshold = max[(expected capacity - (predicted capacity change value of energy storage assembly / total capacity of energy storage assembly) * 100%), guaranteed minimum capacity], where the expected capacity is expected maximum daytime capacity, and the guaranteed minimum capacity is minimum capacity for protecting the power safety of equipment.

In some embodiments, for more accurate prediction, the accuracy of the capacity change value of the energy storage assembly in the historical capacity change value record is crucial. When the maximum daytime capacity of the energy storage assembly is equal to 100%, it may lead to a relatively large deviation in the recorded capacity change value of the energy storage assembly, so that the recorded capacity change value needs to be dynamically adjusted. The specific adjustment process is as follows. If the maximum daytime capacity is equal to 100% and a difference between the maximum daytime capacity and the maximum nighttime capacity is greater than θ, the capacity change value of the energy storage assembly = [(maximum daytime capacity - maximum nighttime capacity) + τ] × total capacity of energy storage, where θ and τ ∈ [1%, 100%]. If the maximum daytime capacity is equal to 100% and a difference between the maximum daytime capacity and the maximum nighttime capacity is less than or equal to θ, the capacity change value of the energy storage assembly = (maximum daytime capacity - maximum nighttime capacity) × total capacity of energy storage. If the maximum daytime capacity is less than 100%, the capacity change value of the energy storage assembly = (maximum daytime capacity - maximum nighttime capacity) × total capacity of energy storage.

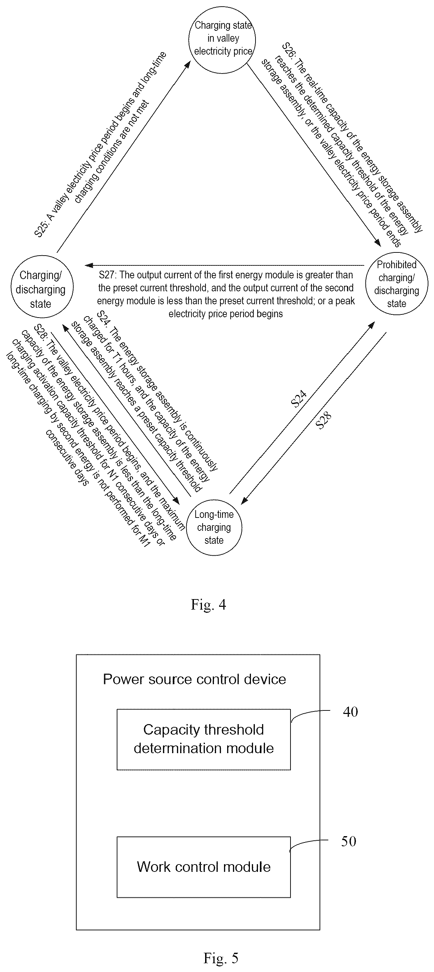

In some embodiments, the above energy storage assembly has a charging/discharging state, a prohibited charging/discharging state, and a charging state during a valley electricity price period. The capacity of the energy storage assembly and the peak and valley electricity price periods are monitored to achieve switching among the above three states. Reference is made to FIG. 4. FIG. 4 is a schematic flowchart of a method for controlling power source of a communication station according to a third embodiment of the present disclosure. The above step S20 includes the following steps.

In S25, when the energy storage assembly is in a charging/discharging state, if a valley electricity price period begins and long-time charging conditions are not met, the energy storage assembly is controlled to enter a charging state during the valley electricity price period.

When the energy storage assembly is in the charging/discharging state, the energy storage assembly can not only discharge for the load but also be charged by the energy module. In order to ensure that the energy storage assembly absorbs the solar energy rather than electrical energy, when the energy storage assembly is in the charging/discharging state, the following settings are made:
An output voltage of the second energy module, namely the rectifier module is controlled to be a relatively high voltage selected from a preset first voltage threshold and a difference between a real-time voltage and a preset second voltage threshold, namely max[busbar voltage - δ2, guaranteed minimum voltage], where the real-time voltage is a detected real-time voltage of a direct-current output terminal, also known as a busbar voltage; the preset first voltage threshold is a guaranteed minimum voltage, which aims to prevent the energy storage assembly from being over-discharged or prevent the load from losing power; and the preset second voltage threshold δ2 is a set empirical value.

An output voltage of the first energy module, namely the solar energy module is controlled to be a sum of the output voltage of the second energy module and a preset third voltage threshold. The preset third voltage threshold δ1 is a set empirical value, where δ1 > δ2 > 0 V. By setting the output voltage of the first energy module, when the solar energy and the mains supply are controlled to supply power to the load, the solar energy is preferentially used to supply power to the load.

In the above embodiment, when the output voltage of the second energy module is controlled, its output voltage will be dynamically adjusted based on a change in the busbar voltage, and the second energy module will change with a change in the first energy module, so that through the adjustment and control of the output voltage of the first energy module, a priority order for supplying power to the load can be set as follows: the first energy module > the energy storage assembly > the second energy module.

In some embodiments, when the energy storage assembly is in the charging/discharging state, a maximum charging current of the energy storage assembly is set to prevent the energy storage assembly from being damaged by an excessive current when the energy module charges the energy storage assembly.

It can be seen from the above content that when the energy storage assembly is in the charging/discharging state, the energy storage assembly may be in a continuous discharging state. Therefore, if the valley electricity price period begins and the long-time charging conditions are not met, the energy storage assembly is controlled to enter the charging state during the valley electricity price period, that is, the energy storage assembly is charged by the mains supply.

When the energy storage assembly is in the charging state during the valley electricity price period, by setting the maximum charging current, the output voltage of the second energy module is adjusted based on the maximum charging current of the energy storage assembly. The specific adjustment process can be implemented with reference to the adjustment solution in the second embodiment.

In S26, when the energy storage assembly is in a charging state during a valley electricity price period, and real-time capacity of the energy storage assembly reaches the determined capacity threshold of the energy storage assembly, or the valley electricity price period ends, the energy storage assembly is controlled to enter a prohibited charging/discharging state.

When the sunlight is weak, the energy storage assembly supplies power to the load, and when the capacity of the energy storage assembly has reached the determined capacity threshold, the energy storage assembly is controlled to prohibit charging/discharging. When the valley electricity price period begins, the energy storage assembly can be controlled to enter the charging state during the valley electricity price period due to the low electricity price. The energy storage assembly is charged by the mains supply until the capacity of the energy storage assembly reaches the determined capacity threshold, and then the energy storage assembly is controlled to enter the prohibited charging/discharging state. Or when the valley electricity price period ends, the energy storage assembly is controlled to enter the prohibited charging/discharging state. The determined capacity threshold not only ensures that the capacity of the energy storage assembly is not too small, but also can prevent the energy storage assembly from being charged when the load is powered during a peak electricity price period, and maximum space can be reserved to absorb the solar energy when the sunlight becomes strong next time.

In S27, when the energy storage assembly is in a prohibited charging/ discharging state, an output current of the first energy module is greater than a preset current threshold, and an output current of the second energy module is less than the preset current threshold, or a peak electricity price period begins, the energy storage assembly is controlled to enter a charging/discharging state.

The first energy module is, for example, a solar energy module, and the second energy module is, for example, a rectifier module for a mains supply. Through the output current of the first energy module and the output current of the second energy module, it can be determined that energy provided by the first energy module is stronger than energy provided by the second energy module. In other words, the solar energy becomes stronger. At this time, the energy storage assembly is controlled to enter the charging/discharging state, and the energy storage assembly can absorb the excess solar energy beyond the power supplied to the load.

In addition, if the peak electricity price period begins, the energy storage assembly is also controlled to enter the charging/discharging state. Due to the high electricity price during the peak electricity price period, the energy storage assembly is controlled to enter the charging/discharging state, so that the energy storage assembly supplies power to the load when the solar energy is insufficient, thus saving energy.

In some embodiments, in order to calibrate the capacity of the energy storage assembly to improve the accuracy of power source control, in this embodiment, a long-time charging state of the energy storage assembly is added, that is, the energy storage assembly is continuously charged by second energy. The conditions for entering or exiting the long-time charging state, and control logic during the long-time charging state can be implemented with reference to the previous second embodiment. The only difference is as follows: In S28, if a valley electricity price period begins, and maximum capacity of the energy storage assembly is less than a long-time charging activation capacity threshold for N2 consecutive days or long-time charging by second energy is not performed for M2 consecutive days, the energy storage assembly is controlled to enter a long-time charging state, and the second energy module is controlled to perform long-time charging on the energy storage assembly until the energy storage assembly is continuously charged for T2 hours and the capacity of the energy storage assembly reaches a preset capacity threshold. In this embodiment, the long-time charging by the mains supply is performed by making full use of the valley electricity price period to save energy.

Compared with the prior art, the embodiment of the present disclosure has the following effects:
(1) According to the embodiment of the present disclosure, in the power source control of the communication station, the capacity of the energy storage assembly is maintained at the reference capacity by determining the capacity threshold of the energy storage assembly and controlling the working states of the energy module and the energy storage assembly, so that the energy storage assembly can reserve more capacity space to absorb the excess solar energy. This not only improves the utilization efficiency of the solar energy, but also avoids the waste of other energy sources, thus saving energy.
(2) The capacity threshold of the energy storage assembly can be gradually and dynamically adjusted to the optimal capacity based on the actual situation of the power system for the communication station, which can not only maximize the absorption of the solar energy exceeding the load power, but also enable the energy storage assembly to reach the nearly fully charged state.
(3) The power source control method according to the embodiment of the present disclosure achieves the power source control of the communication station through a solution that is simpler than the algorithm of background network management. The method not only improves the utilization efficiency of the solar energy, but also runs directly in each communication station. This not only reduces the dependence of the power supply of the communication station on the outside or the background network management, but also lowers the implementation cost and difficulty. Therefore, the present disclosure can be promoted in a wider range.

### Specific application example 1

A description is given for a strategy for improving the photovoltaic utilization efficiency in the scenario of the flat electricity price of the mains supply for the communication power station.

Station configuration:
Five 550 Wp photovoltaic panels, with estimated maximum output power of 2,100 W.
One 3,000 W solar energy module.
One 3,000 W rectifier module.

The energy storage assembly is a conventional lithium battery with the capacity of 100 AH.

The average power consumption of the station load is 1,000 W, and the maximum power consumption is 2,000 W.

Control and switching strategies of communication power system for charging/discharging state, prohibited charging/discharging state, and mains-supply long-time charging state of energy storage assembly:

### Control of charging/discharging state

### 1) Control parameter setting

The maximum charging current of the energy storage assembly = 0.5C10, (which is a parameter setting value).

The output voltage of the rectifier module = max[busbar voltage - 0.5 V, 46 V]. (The guaranteed minimum voltage is a parameter setting value, and the busbar voltage is a real-time detected value) The output voltage of the solar energy module = the output voltage of the rectifier module + 0.9 V.

According to the set conditions, the output priorities can be obtained as follows: the output of the solar energy module > the output of the energy storage assembly > the output of the rectifier.

The function of the guaranteed minimum voltage is to prevent the energy storage assembly from being over-discharged or to prevent the load from losing power.

### 2) Conditions for entering charging/discharging state

After the system is started, if the real-time percentage capacity of the energy storage assembly is greater than the reference capacity of the energy storage assembly, the energy storage assembly enters the charging/discharging management state.

In the prohibited charging/discharging management state, if the output current of the rectifier module is less than 2 A (which is adjusted according to the detection accuracy of the system and is mainly used to determine that the rectifier module has no output), the output current of the solar energy module is greater than 2 A, and the current of the energy storage assembly is greater than - 1 A, the energy storage assembly enters the charging/discharging management state.

In the mains-supply long-time charging management state, when the long-time charging completion conditions are met, that is, the charging time is greater than or equal to 10 hours and the capacity of the energy storage assembly is 100%, the energy storage assembly enters the charging/discharging management state.

### 3) Conditions for exiting charging/discharging state

If the real-time percentage capacity of the energy storage assembly is less than or equal to the reference percentage capacity of the energy storage assembly and the energy storage assembly is in the discharging state, the energy storage assembly exits the charging/discharging management state and enters the prohibited charging and discharging management state.

If the system time reaches long-time charging activation time and the maximum capacity of the energy storage assembly is less than 90% for 7 consecutive days or the long-time charging by the mains supply is not performed for 15 consecutive days, the energy storage assembly exits the charging/discharging management state and enters the mains-supply long-time charging management state.

### Control of prohibited charging/discharging state

### 1) Control parameter setting

The charging current of the energy storage assembly ∈ [-1 A, 1 A].

The expected output voltage of the rectifier module = 54 V, (which is a parameter value). The output voltage of the solar energy module = the output voltage of the rectifier module + 0.9 V.

### 2) Conditions for entering prohibited charging/discharging state

After the system is started, if the real-time percentage capacity of the energy storage assembly is less than or equal to the reference capacity of the energy storage assembly, the energy storage assembly enters the charging/discharging management state.

In the charging/discharging management state, if the real-time percentage capacity of the energy storage assembly is less than or equal to the reference capacity of the energy storage assembly and the current of the energy storage assembly is less than -2 A, the energy storage assembly enters the prohibited charging and discharging management state.

### 3) Conditions for exiting prohibited charging/discharging state

If the output current of the rectifier module is less than 2 A (which is adjusted according to the detection accuracy of the system and is mainly used to determine that the rectifier module has no output), the output current of the solar energy module is greater than 2 A, and the current of the energy storage assembly is greater than 1 A, the energy storage assembly exits the prohibited charging/discharging management state.

If the system time reaches 16:00 and the maximum capacity of energy storage is less than 90% for 7 consecutive days or the long-time charging by the mains supply is not performed for 15 consecutive days, the energy storage assembly exits the prohibited charging/discharging management state and enters the mains-supply long-time charging management state.

### Control of long-time charging by mains supply

### 1) Control parameter setting

The set shortest time for long-time charging by the mains supply = 10 hours.

The maximum charging current of the energy storage assembly = 0.5C10.

The expected output voltage of the rectifier module = 54 V. The output voltage of the solar energy module = the output voltage of the rectifier module + 0.9 V.

### 2) Conditions for entering mains-supply long-time charging state

In the charging/discharging state or the prohibited charging/discharging state, if the system time reaches 16:00 and the maximum capacity of energy storage is less than 90% for 7 consecutive days or the long-time charging by the mains supply is not performed for 15 consecutive days, the energy storage assembly enters the mains-supply long-time charging state.

### 3) Conditions for exiting mains-supply long-time charging state

When the long-time charging completion conditions are met, that is, the charging time is greater than or equal to 10 hours and the capacity of the energy storage assembly is 100%, the energy storage assembly exits the mains-supply long-time charging state.

Dynamic adjustment strategy of system for reference percentage capacity (i.e., capacity threshold) of energy storage assembly

### 1) Percentage capacity extremum record of energy storage assembly

Record content: date, maximum percentage capacity of energy storage assembly, and minimum percentage capacity of energy storage assembly.
Recording period: 1 day.
Time freezing: freezing and recording of daily extremum at 24:00, and starting of recording for the next day.
Number of records: 7.
Saving method: cyclic overwriting, and saving when system loses power.

### 2) Dynamic determination of reference percentage capacity of energy storage assembly

If the maximum capacity of the energy storage assembly is equal to 100% and the difference between the maximum capacity of the energy storage assembly and the minimum capacity of the energy storage assembly is greater than 10%, 5% is subtracted from the reference capacity of the energy storage assembly.

If the maximum capacity of the energy storage assembly is equal to 100% and the difference between the maximum capacity of the energy storage assembly and the minimum capacity of the energy storage assembly is less than or equal to 10%, the reference capacity of the energy storage assembly remains unchanged.

If the maximum capacity of the energy storage assembly is within the range of [95%, 99%], the reference capacity of the energy storage assembly remains unchanged.

If the maximum capacity of the energy storage assembly in the last 7 days is less than or equal to 94%, the reference capacity of the energy storage assembly + max[5%, max(maximum capacity in the last 7 days)].

If the maximum capacity of the energy storage assembly in the last 7 days is greater than 94%, the reference capacity of the energy storage assembly remains unchanged.

### 3) Description of reference percentage capacity of energy storage assembly

Capacity: 80% by default, and range [40%, 90%].

Through the above steps, the reference percentage capacity of the energy storage assembly can be gradually and dynamically adjusted to the optimal capacity based on the actual situation of the communication power system, which can not only maximize the absorption of the solar energy exceeding the load power, but also enable the energy storage assembly to reach the nearly fully charged state.

### Specific application example 2

A description is given for a strategy for improving the photovoltaic utilization efficiency in the scenario of the peak and valley electricity prices of the mains supply for the communication power station:

### Station configuration:

Five 550 Wp photovoltaic panels, with estimated maximum output power of 2,100 W.
One 3,000 W solar energy module.
Two 3,000 W rectifier modules.

The energy storage assembly is a conventional lithium battery with the capacity of 200 AH.

The average power consumption of the station load is 1,000 W, and the maximum power consumption is 2,000 W.

Peak and valley periods: The valley electricity price period is from 23:00 to 6:00 the next day, the peak electricity price period is from 7:00 to 12:00 and 14:00 to 22:00, and the remaining period is the flat electricity price period.

Control and switching strategies of communication power system for charging/discharging state, charging state during valley electricity price period, prohibited charging/discharging state, and mains-supply long-time charging state of energy storage assembly:

### Control of charging/discharging state

### 1) Control parameter setting

The maximum charging current of the energy storage assembly = 0.5C10, (which is a parameter setting value).

The output voltage of the rectifier module = max[busbar voltage - 0.5 V, 46 V]. (The guaranteed minimum voltage is a parameter setting value) The output voltage of the solar energy module = the output voltage of the rectifier module + 0.9 V.

According to the set conditions, the output priorities can be obtained as follows: the output of the solar energy module > the output of the energy storage assembly > the output of the rectifier.

The function of the guaranteed minimum voltage is to prevent the energy storage assembly from being over-discharged or to prevent the load from losing power.

### 2) Conditions for entering charging/discharging state

In the prohibited charging/discharging management state, if the output current of the rectifier module is less than 2 A (which is adjusted according to the detection accuracy of the system and is mainly used to determine that the rectifier module has no output), the output current of the solar energy module is greater than 2 A, and the charging current of the energy storage assembly is greater than 1A, the energy storage assembly enters the charging/discharging management state; or when the peak electricity price period begins, the energy storage assembly enters the charging/discharging management state.

In the mains-supply long-time charging management state, when the long-time charging completion conditions are met, that is, the charging time reaches the valley electricity price period and the capacity of the energy storage assembly is 100%, the energy storage assembly enters the charging/discharging management state.

### 3) Conditions for exiting charging/discharging state

If the system time reaches the valley electricity price period and the maximum capacity of energy storage is less than 90% for 7 consecutive days or the long-time charging by the mains supply is not performed for 15 consecutive days, the energy storage assembly exits the charging/discharging management state and enters the mains-supply long-time charging management state.

If the system time reaches the valley electricity price period and the mains-supply long-time charging conditions are not met, the energy storage assembly exits the charging/discharging management state and enters the charging state during the valley electricity price period.

### Control of charging state during valley electricity price period

### 1) Control parameter setting

The charging target percentage capacity = the reference charging termination percentage capacity (dynamically adjusted).

The charging current of the energy storage assembly = 0.3C10, (which is a parameter setting value).

The expected output voltage of the rectifier module = 54 V, (which is a parameter value). The output voltage of the solar energy module = the output voltage of the rectifier module + 0.9 V.

### 2) Conditions for entering charging state during valley electricity price period

In the charging/discharging state, if the valley electricity price period begins and the conditions for entering the mains-supply long-time charging state are not met, the energy storage assembly enters the charging management state during the valley electricity price period.

### 3) Conditions for exiting charging state during valley electricity price period

If the real-time percentage capacity of the energy storage assembly reaches the reference charging termination percentage capacity of the energy storage assembly or the valley electricity price period ends, the energy storage assembly exits the charging management state during the valley electricity price period.

### Control of prohibited charging/discharging state

### 1) Control parameter setting

The charging current of the energy storage assembly ∈ [-1, 1]. (a is adjusted according to the detection accuracy of the system)

The expected output voltage of the rectifier module = 54 V, (which is a parameter value). The output voltage of the solar energy module = the output voltage of the rectifier module + 0.9 V.

### 2) Conditions for entering prohibited charging/discharging state

In the charging state during the valley electricity price period, if the real-time percentage capacity of the energy storage assembly reaches the reference charging termination percentage capacity of the energy storage assembly or the valley electricity price period ends, the energy storage assembly enters the prohibited charging/discharging management state.

### 3) Conditions for exiting prohibited charging/discharging state

If the output current of the rectifier module is less than 2 A (which is adjusted according to the detection accuracy of the system and is mainly used to determine that the rectifier module has no output), the output current of the solar energy module is greater than 2 A, and the current of the energy storage assembly is greater than 1 A, or the peak electricity price period begins, the energy storage assembly exits the prohibited charging/discharging management state.

### Control of long-time charging by mains supply

### 1) Control parameter setting

The set shortest time for long-time charging by the mains supply = 8 hours.

The maximum charging current of the energy storage assembly = 0.3C10.

The expected output voltage of the rectifier module = 54 V. The output voltage of the solar energy module = the output voltage of the rectifier module + 0.9 V.

### 2) Conditions for entering mains-supply long-time charging management state

In the charging/discharging state, if the system time reaches the valley electricity price period and the maximum capacity of energy storage is less than 90% for 7 consecutive days or the long-time charging by the mains supply is not performed for 15 consecutive days, the energy storage assembly enters the mains-supply long-time charging state.

### 3) Conditions for exiting mains-supply long-time charging state

When the long-time charging completion conditions are met, that is, the charging time exceeds the duration of the valley electricity price period and the capacity of the energy storage assembly is 100%, the energy storage assembly exits the mains-supply long-time charging state.

Dynamic adjustment strategy of system for reference charging termination percentage capacity (i.e., capacity threshold) during valley electricity price period

### 1) Capacity change value record of energy storage assembly

Record content: date, weather factor, crowd factor, maximum daytime capacity of energy storage assembly, maximum nighttime capacity of energy storage assembly, and capacity change value of energy storage assembly.
Recording frequency: once a day.
Number of records: 30.

| Record content | Data source |
|---|---|
| Date | System time |
| Daily cloud cover (weather factor) | Station location information is transmitted to a network management system, and the power network management system sends a daily weather condition (1: sunny; 2: cloudy; 3: overcast (including rain)) that matches the station location. |
| Maximum temperature (weather factor) | Station location information is transmitted to a network management system, and the power network management system sends maximum daily temperature that matches the station location. |
| Weekends or holidays (crowd factor) | Whether it is a holiday can be determined by marking the weekend according to the date. (Or the law of variation can be automatically identified based on the data.) |
| Maximum daytime percentage capacity of energy storage assembly | Maximum percentage capacity of energy storage assembly at (7:00, 19:00] every day |
| Maximum nighttime battery capacity | Maximum percentage capacity of energy storage assembly at (0:00, 7:00] every day |
| Capacity change of energy storage assembly | (Maximum daytime percentage capacity of energy storage assembly - maximum nighttime percentage capacity of energy storage assembly) × 200 AH. |

(Maximum daytime percentage capacity of energy storage assembly - maximum nighttime percentage capacity of energy storage assembly) × 200 AH.

### 2) Prediction of capacity change value of energy storage assembly

The records are searched for the matching records of the weather factor and the crowd factor in the last 3 times, and the obtained 3 capacity change records of the energy storage assembly are averaged to obtain the predicted solar power storage capacity for the next day. If there are no such matching records, the records are searched for the matching records of the weather factor and the crowd factor in the last 2 times, and the obtained 2 capacity change records of the energy storage assembly are averaged to obtain the predicted solar power storage capacity for the next day. If the matching records of the weather factor and the crowd factor are not found in the records, the latest capacity change record of the energy storage assembly is selected as the predicted solar power storage capacity for the next day.

### 3) Adjustment strategy for capacity change value of energy storage assembly in record

If the maximum daytime capacity is equal to 100% and a difference between the maximum daytime capacity and the maximum nighttime capacity is greater than 10%, the capacity change value of the energy storage assembly = [(maximum daytime capacity - maximum nighttime capacity) + 5%] × 200 AH, where α and β ∈ [1%, 100%].

If the maximum daytime capacity is equal to 100% and a difference between the maximum daytime capacity and the maximum nighttime capacity is less than or equal to 10%, the capacity change value of the energy storage assembly = (maximum daytime capacity - maximum nighttime capacity) × 200 AH.

If the maximum daytime capacity is less than 100%, the capacity change value of the energy storage assembly = (maximum daytime capacity - maximum nighttime capacity) × 200 AH.

### 4) Application of predicted results

The reference charging termination percentage capacity = MAX[(95% - (predicted capacity change value of energy storage assembly / 200 AH) * 100%), 40%].

Through the above steps, the reference termination charging percentage capacity of the energy storage assembly can be gradually and dynamically adjusted to the optimal capacity according to the actual situation of the communication power system. When the energy storage assembly approaches the nearly fully charged state, it can not only make full use of the solar energy exceeding the load power, but also maximize the use of the mains supply during the valley electricity price period. The method transforms the prediction of the solar energy production capacity and the load power consumption into the prediction of the cumulative capacity change of the energy storage assembly within a day, which greatly reduces the amount of recorded data and greatly simplifies the prediction algorithm, so that it can be deployed on the side of the communication station.

The examples listed above are only for reference. In order to avoid redundancy, they will not be listed one by one herein. In actual development or application, flexible combinations can be made according to actual requirements. However, any combination belongs to the technical solution of the present disclosure and is thus covered within the scope of protection of the present disclosure.

Referring to FIG. 5, in some embodiments, the present disclosure provides a device for controlling power source of a communication station, including:
a capacity threshold determination module 30, configured to determine a capacity threshold of an energy storage assembly of the communication station; and
a work control module 40, configured to control working states of an energy module and the energy storage assembly of the communication station based on the determined capacity threshold of the energy storage assembly.

For the principle and process of implementing power source control of the communication station in this embodiment, reference is made to the above embodiments, and details will not be repeated herein.

The present disclosure further provides a communication station, including a memory and a processor, where the memory stores a processing program, and when the processing program is executed by the processor, the steps of the processing method according to any one of the above embodiments are implemented.

The present disclosure further provides a computer-readable storage medium, having a processing program stored thereon, where when the processing program is executed by a processor, the steps of the processing method according to any one of the above embodiments are implemented.

In the embodiments of the communication device and the computer-readable storage medium provided by the present disclosure, all the technical features of any of the above processing method embodiments may be included. The expanded and explained content of the specification is basically the same as that of each of the above method embodiments and will not be repeated herein.

An embodiment of the present disclosure further provides a computer program product, including computer program codes, where when the computer program codes run on a computer, the computer is caused to execute the methods in the various possible implementations as described above.

It can be understood that the above scenarios are merely examples and do not constitute limitations on the application scenarios of the technical solutions provided by the embodiments of the present disclosure. The technical solutions of the present disclosure can also be applied to other scenarios. For example, those of ordinary skill in the art know that with the evolution of the system architecture and the emergence of new business scenarios, the technical solutions provided by the embodiments of the present disclosure are also applicable to similar technical problems.

The serial numbers of the above embodiments of the present disclosure are only for description and do not represent the advantages or disadvantages of the embodiments.

The steps in the methods according to the embodiments of the present disclosure can be adjusted in order, combined, and deleted according to actual requirements.

The units in the devices according to the embodiments of the present disclosure can be combined, divided, and deleted according to actual requirements.

In the present disclosure, for the description of the same or similar term concepts, technical solutions, and/or application scenarios, detailed descriptions are generally provided only when they first appear. For the sake of brevity, they are generally not repeated when they appear again later. When understanding the technical solutions and other content of the present disclosure, for the same or similar term concepts, technical solutions, and/or application scenarios that are not described in detail later, reference can be made to the previous relevant detailed descriptions.

In the present disclosure, the description of each embodiment has its own emphasis. For parts that are not detailed or recorded in a certain embodiment, reference can be made to the relevant descriptions of other embodiments.

The technical features of the technical solutions of the present disclosure can be combined arbitrarily. For the sake of brevity, all possible combinations of the technical features in the above embodiments are not described. However, the combinations of these technical features should be considered to be within the scope of the present disclosure as long as there is no contradiction between them.

Through the description of the above implementations, those skilled in the art can clearly understand that the methods according to the above embodiments can be implemented by means of software and a necessary general-purpose hardware platform. Certainly, they can also be implemented by means of hardware. However, in many cases, the former is a better implementation. Based on such an understanding, the technical solution of the present disclosure, in essence, or the part that makes contributions to the prior art may be embodied in the form of a software product. The computer software product is stored in a storage medium as described above (e.g., a ROM/RAM, a magnetic disk, or a compact disc) and includes a plurality of instructions for causing a terminal device (that may be a mobile phone, a computer, a server, a controlled terminal, or a network device) to perform the method according to each embodiment of the present disclosure.

In the above embodiments, all or some of them can be implemented by software, hardware, firmware, or any combination thereof. When implemented by software, all or some of them can be implemented in the form of a computer program product. The computer program product includes one or more computer instructions. When the computer program instructions are loaded and executed on a computer, all or some of the processes or functions according to the embodiments of the present disclosure are generated. The computer may be a general-purpose computer, a special-purpose computer, a computer network, or other programmable devices. The computer instructions can be stored in a computer-readable storage medium or transmitted from one computer-readable storage medium to another. For example, the computer instructions can be transmitted from one website, computer, server, or data center to another website, computer, server, or data center in a wired mode (e.g., a coaxial cable, an optical fiber, and a digital subscriber line) or in a wireless mode (e.g., infrared, Wi-Fi, and microwave). The computer-readable storage medium may be any available medium that the computer can access, or a data storage device such as a server or a data center that integrates one or more available media. The available medium may be a magnetic medium (e.g., a floppy disk, a storage disk, and a magnetic tape), an optical medium (e.g., a DVD), or a semiconductor medium (e.g., a solid state disk (SSD)).

The above are only optional embodiments of the present disclosure and are not intended to limit the patent scope of the present disclosure. Any equivalent structure or equivalent process changes made using the content of the specification and drawings of the present disclosure, directly or indirectly applied in other related technical fields, are similarly included within the scope of patent protection of the present disclosure.

## Claims

1. A method for controlling power source of a communication station, comprising:
determining a capacity threshold of an energy storage assembly of the communication station; and
controlling working states of an energy module and the energy storage assembly of the communication station based on the determined capacity threshold of the energy storage assembly.

2. The method for controlling power source of the communication station according to claim 1, wherein the determining a capacity threshold of an energy storage assembly of the communication station comprises:
dynamically adjusting the capacity threshold of the energy storage assembly based on a historical capacity record of the energy storage assembly during operation of the communication station, so that the energy storage assembly absorbs energy exceeding load power to the maximum extent.

3. The method for controlling power source of the communication station according to claim 2, wherein the step of dynamically adjusting the capacity threshold of the energy storage assembly based on a historical capacity record of the energy storage assembly during operation of the communication station comprises:
in a case of a flat electricity price of a mains supply, adjusting the capacity threshold of the energy storage assembly based on a historical capacity extremum record of the energy storage assembly during the operation of the communication station; or
in a case of the peak and valley electricity prices of the mains supply, predicting a capacity change value of the energy storage assembly on the next day based on a weather environment in a historical capacity change value record of the energy storage assembly during operation of the communication station, and adjusting the capacity threshold of the energy storage assembly based on the predicted capacity change value of the energy storage assembly.

4. The method for controlling power source of the communication station according to claim 3, wherein before the step of adjusting the capacity threshold of the energy storage assembly based on the predicted capacity change value of the energy storage assembly, the method further comprises:
correcting the predicted capacity change value of the energy storage assembly based on maximum daytime capacity and maximum nighttime capacity in the historical capacity change value record.

5. The method for controlling power source of the communication station according to claim 1, wherein the energy module comprises a first energy module and a second energy module, and an output priority of the first energy module is higher than an output priority of the second energy module; and the step of controlling working states of an energy module and the energy storage assembly of the communication station based on the determined capacity threshold of the energy storage assembly comprises:
when real-time capacity of the energy storage assembly is less than or equal to the determined capacity threshold of the energy storage assembly, and the energy storage assembly is in a discharging state, controlling the energy storage assembly to enter a prohibited charging or discharging state; or
when the energy storage assembly is in a charging state during a valley electricity price period, and real-time capacity of the energy storage assembly reaches the determined capacity threshold of the energy storage assembly, or the valley electricity price period ends, controlling the energy storage assembly to enter a prohibited charging or discharging state; or
when the energy storage assembly is in a prohibited charging/ discharging state, an output current of the first energy module is greater than a preset current threshold, and an output current of the second energy module is less than the preset current threshold, or a peak electricity price period begins, controlling the energy storage assembly to enter a charging or discharging state.

6. The method for controlling power source of the communication station according to claim 1, further comprising:
when the energy storage assembly is in a charging or discharging state, if a valley electricity price period begins and long-time charging conditions are not met, controlling the energy storage assembly to enter a charging state during the valley electricity price period.

7. The method for controlling power source of the communication station according to claim 1, wherein the energy module comprises a first energy module and a second energy module, and an output priority of the first energy module is higher than an output priority of the second energy module; and the method further comprises:
when preset long charging time is reached, and maximum capacity of the energy storage assembly is less than a long-time charging activation capacity threshold for N1 consecutive days or long-time charging by second energy is not performed for M1 consecutive days, controlling the second energy module to perform long-time charging on the energy storage assembly until the energy storage assembly is continuously charged for T1 hours and the capacity of the energy storage assembly reaches a preset capacity threshold; or
when a valley electricity price period begins, and maximum capacity of the energy storage assembly is less than a second-energy long-time charging activation capacity threshold for N2 consecutive days or long-time charging by second energy is not performed for M2 consecutive days, controlling the second energy module to perform long-time charging on the energy storage assembly until the energy storage assembly is continuously charged for T2 hours and the capacity of the energy storage assembly reaches a preset capacity threshold.

8. The method for controlling power source of the communication station according to claim 1, wherein the energy module comprises a first energy module and a second energy module; and the method further comprises:
when the energy storage assembly is in a charging or discharging state, supplying power to a load in an output priority order of the first energy module, the energy storage assembly, and the second energy module; or
when the energy storage assembly is in a charging or discharging state, controlling an output voltage of the second energy module to be a relatively high voltage selected from a preset first voltage threshold and a difference between a real-time voltage and a preset second voltage threshold; and controlling an output voltage of the first energy module to be a sum of the output voltage of the second energy module and a preset third voltage threshold.

9. The method for controlling power source of the communication station according to claim 1, wherein the energy module comprises a first energy module and a second energy module; and the method further comprises:
when the energy storage assembly is in a prohibited charging or discharging state, adjusting an output voltage of the second energy module to enable a charging current of the energy storage assembly to be within a preset current range; and controlling an output voltage of the first energy module to be a sum of the output voltage of the second energy module and a preset third voltage threshold,
wherein when the output voltage of the second energy module increases to a preset fourth voltage threshold, the output voltage is maintained at the fourth voltage threshold for operation.

10. The method for controlling power source of the communication station according to claim 1, wherein the energy module comprises a first energy module and a second energy module; and the method further comprises:
when the energy storage assembly is in a second-energy long-time charging state, adjusting an output voltage of the second energy module to enable a charging current of the energy storage assembly to reach a preset maximum charging current, wherein when the output voltage of the second energy module increases to a preset fourth voltage threshold, the output voltage is maintained at the fourth voltage threshold for operation.

11. A device for controlling power source of a communication station, comprising:
a capacity threshold determination module, configured to determine a capacity threshold of an energy storage assembly of the communication station; and
a work control module, configured to control working states of an energy module and the energy storage assembly of the communication station based on the determined capacity threshold of the energy storage assembly.

12. A communication station, comprising an energy module, an energy storage assembly, and a power source control module, wherein the power source control module comprises a processor and a memory, the memory stores a program for controlling the energy module and the energy storage assembly, and the program is configured to, when executed by the processor, perform the method according to any one of claims 1 to 10.

13. A computer storage medium, storing a computer processing program which is configured to, when executed by a processor, perform the method according to any one of claims 1 to 10.
